# EUROPEAN PATENT APPLICATION

(11) **EP 4 610 718 A1**
(43) Date of publication of application: **03.09.2025**
(21) Application number: 23900938.4
(22) Date of filing: 15.11.2023
(51) Int. Cl.: G02F 1/1333, G02F 1/13357, G02B 6/00

(54) **ELASTIC MOLD FRAME, BACKLIGHT UNIT, AND DISPLAY DEVICE COMPRISING SAME**

(30) Priority: 06.12.2022 KR 20220168322
(71) Applicant: Tovis Co., Ltd., Incheon 22011 (KR)
(72) Inventor: KIM, Hwanjin, Gwangmyeong-si Gyeonggi-do 14233 (KR); BAEK, Jungho, Incheon 21986 (KR)
(74) Representative: BCKIP Part mbB
(86) International application number: PCT/KR2023/018315
(87) International publication number: WO 2024/122919

(57) **Abstract**

A backlight unit according to an embodiment of the present invention comprises an optical sheet, a bottom chassis including a back plate and a side wall and having an accommodating space therein, a light source module accommodated in the accommodating space and disposed between the optical sheet and the back plate to irradiate light and an elastic mold frame including a mounting portion coupled to the side wall of the bottom chassis and extending from an outer side of the optical sheet toward an inner side of the optical sheet, and a bumper portion protruded in a stepped manner from an outer side of the mounting portion toward a front side, the elastic mold frame including silicone or rubber. According to one embodiment of the present invention, the protective performance for protecting the liquid crystal panel from impact and vibration is improved, and the time required for manufacturing is reduced.

## Description

### Technical field

The present disclosure relates to an elastic mold frame, a backlight unit, and a display device having the same, and more particularly, to an elastic mold frame assembled inside a chassis constituting an outer appearance of a display device to protect a liquid crystal panel from impact, a backlight unit including the same, and a display device including the elastic mold frame and the backlight unit.

### Background Art

In general, a liquid crystal display device includes a liquid crystal panel that displays an image using light transmittance of liquid crystals, and backlight units(BLU) that are disposed below the liquid crystal panel to provide light to the liquid crystal panel.

The backlight unit may include a light source for generating light, and the light source may be a cold cathode fluorescent lamp, a hot cathode fluorescent lamp, a light emitting diode, or the like.

The backlight unit is provided with a chassis constituting the exterior of the display device and a mold frame provided between the chassis and the outer periphery of the liquid crystal panel to settle the outer periphery of the liquid crystal panel and protect the liquid crystal panel from external impacts.

However, since the mold frame for a backlight unit according to the related art is developed and used as a plastic material by manufacturing an expensive injection mold, the mold frame for a backlight unit requires an expensive investment cost for manufacturing and takes a long time for development.

In addition, the mold frame according to the related art has a high possibility of product defects due to lack of impact absorption performance to easily defend against damage applied to the liquid crystal panel in high vibration and drop tests due to the characteristics of a plastic material.

### Disclosure

### Technical problem

One technical aspect of the present invention is to solve the above-described problems of the prior art.

An object of the present invention is to provide an elastic mold frame, a backlight unit, and a display device having the same, which have improved protection performance for protecting a liquid crystal panel from impact and vibration.

In addition, according to an embodiment of the present invention, an elastic mold frame, a backlight unit, and a display device having the same are provided in which a manufacturing time is shortened and a manufacturing cost of a mold is reduced.

The objects of the present invention are not limited to the objects mentioned above, and other objects not mentioned will be clearly understood by those skilled in the art from the following description.

### Technical Solution

An elastic mold frame according to one aspect of the present invention is provided in a display device including a liquid crystal panel, an optical sheet disposed at a rear of the liquid crystal panel, a light guide plate or a diffusion plate disposed at a rear of the optical sheet, and a light source module configured to irradiate light to the light guide plate or the diffusion plate, and disposed at an outer periphery of the liquid crystal panel and the optical sheet, and the elastic module comprises a bumper portion formed to surround an outer periphery of the liquid crystal panel and a mounting portion extending from the bumper portion to an inside of the optical sheet to allow a portion of a rear surface of the liquid crystal panel to be mounted thereon, and forming a gap between the liquid crystal panel and the optical sheet, and the elastic mold frame is made of an elastic material.

In one embodiment, the material is silicone or rubber.

In one embodiment, the elastic mold frame further comprises a chassis-receiving groove into which a portion of an end of a bottom chassis, which is formed in a box shape with an open front and accommodates the light source module therein, is inserted and fastened.

In one embodiment, the elastic mold frame comprises a first mold, a second mold, a third mold, and a fourth mold respectively corresponding to four sides of the liquid crystal panel having a rectangular shape, and the first mold, the second mold, the third mold, and the fourth mold are separately injection-molded.

In one embodiment, one of the first mold, second mold, third mold, and fourth mold includes the chassis-receiving groove recessed in a frontward direction of the light guide plate, so that a portion of a non-light emitting substrate region of the light source module, which irradiates light toward the light guide plate from a side of the light guide plate, is insertable into the chassis-receiving groove.

In one embodiment, the chassis-receiving groove is formed in the first mold and the third mold facing each other among the first mold, the second mold, the third mold, and the fourth mold.

In one embodiment, the first mold and the third mold include the chassis-receiving groove recessed in a lateral direction of the optical sheet, so that an outer edge of the optical sheet and the diffusion plate is insertable into the chassis-receiving groove.

In one embodiment, the bumper portion has a rounded corner where the front and side surfaces are connected.

According to an embodiment of the present invention, a backlight unit comprises an optical sheet, a bottom chassis including a back plate and a side wall and having an accommodating space therein, a light source module accommodated in the accommodating space and disposed between the optical sheet and the back plate to irradiate light and an elastic mold frame including a mounting portion coupled to the side wall of the bottom chassis and extending from an outer side of the optical sheet toward an inner side of the optical sheet, and a bumper portion protruded in a stepped manner from an outer side of the mounting portion toward a front side, the elastic mold frame including silicone or rubber.

In one embodiment, the backlight unit further comprises the light source module disposed on the side wall, a light guide plate disposed between the back plate and the optical sheet so that the light source module is positioned at a side thereof, and a reflective film disposed on a rear surface of the light guide plate.

In one embodiment, the elastic mold frame comprises a chassis-receiving groove into which an end portion of the side wall and a portion of a non-light emitting substrate region of the light source module are inserted.

In one embodiment, the light source module is disposed on one of four sides of the optical sheet having a rectangular shape, and one of a first mold, a second mold, a third mold, and a fourth mold of the elastic mold frame, each corresponding to one of four sides of the optical sheet, may be provided with a chassis-receiving groove.

In one embodiment, the light source module is disposed on the back plate and is configured to irradiate light toward the optical sheet, and the backlight unit comprises a diffusion plate disposed between the light source module and the optical sheet and a reflective plate provided to surround a periphery of a light-irradiation gap between the light source module and the optical sheet.

In one embodiment, the elastic mold frame comprises a chassis-receiving groove into which an end portion of the side wall, an outer edge of the optical sheet, and an outer edge of the diffusion plate are inserted.

In one embodiment, the elastic mold frame comprises the chassis-receiving groove in the first mold and the third mold facing each other among a first mold, a second mold, a third mold, and a fourth mold corresponding to each of four sides of the optical sheet formed in a rectangular shape.

In one embodiment, the bumper portion has a rounded corner where the front and side surfaces are connected.

A display device according to an embodiment of the present invention comprises a liquid crystal panel, a backlight unit according to claims 9 to 16 disposed at a rear side of the liquid crystal panel to provide light to the liquid crystal panel and a top chassis covering a portion of a front outer periphery of the liquid crystal panel and front and side surfaces of an elastic mold frame included in the backlight unit and coupled to a bottom chassis included in the backlight unit.

The technical solutions for solving the above-described problems do not enumerate all of the features of the present invention. Various technical solutions for achieving the objectives of the present invention will become more apparent from the following detailed description with reference to specific embodiments.

### Advantageous Effects

According to the present invention, there are one or more of the following effects.

According to an embodiment of the present invention, it is possible to obtain an effect of improving the protection performance of the liquid crystal panel to protect the liquid crystal panel from vibration and impact.

In addition, according to an embodiment of the present invention, it is possible to obtain the effect of reducing the manufacturing time and reducing the manufacturing cost of the mold.

The effects of the present invention are not limited to the effects mentioned above, and other effects not mentioned will be clearly understood by those skilled in the art from the description of the claims.

### Description of Drawings

FIG. 1 is a perspective view of an elastic mold frame according to an embodiment of the present disclosure.
FIGS 2 to 5 are cross-sectional views of a first mold, a second mold, a third mold, and a fourth mold included in the elastic mold frame shown in FIG. 1.
FIG. 6 is a side cross-sectional view of a display device including the elastic mold frame shown in FIG. 1.
FIG. 7 is an exploded perspective view of an elastic mold frame according to another embodiment of the present disclosure.
FIGS. 8 to 11 are cross-sectional views of a first mold, a second mold, a third mold, and a fourth mold included in the elastic mold frame shown in FIG. 7.
FIG. 12 is a side cross-sectional view of a display device including the elastic mold frame shown in FIG. 7.

### Best mode

Hereinafter, preferred embodiments of the present invention will be described with reference to the accompanying drawings.

However, it should be understood that the embodiments of the present invention may be modified in various ways without departing from the spirit or scope of the invention.

The scope of the present invention is not limited to the embodiments described below. Rather, the embodiments are provided to more fully explain the present invention to those skilled in the art.

The various embodiments of the present disclosure and the terminology used herein are not intended to limit the technical features described to specific embodiments, but should be understood to include various modifications, equivalents, or alternatives thereof. In the description of the drawings, similar or related components may be denoted by similar reference numerals. Unless clearly stated otherwise in the context, a singular form of a noun corresponding to an item may include both a single item and multiple items. In this disclosure, expressions such as "A or B", "at least one of A and B", "at least one of A or B", "A, B, or C", "at least one of A, B, and C" , and "at least one of A, B, or C" are intended to encompass any one or all combinations of the listed items. Terms such as "first", "second", "primary", or "secondary" may be used merely to distinguish one component from another and do not necessarily imply importance or order. When a component (e.g., a first component) is referred to as being "coupled to", "connected to", or "linked to" another component (e.g., a second component), whether with or without terms such as "functionally" or "communicatively", it is to be understood that the component may be directly connected to the other component, or indirectly connected through a third component.

The term "module" as used in this disclosure may refer to a unit implemented in hardware, software, or firmware, and may be used interchangeably with terms such as logic, logic block, component, or circuit. A module may be an integrated component, or a minimum unit or a portion thereof that performs one or more functions of the component. For example, in one embodiment, a module may be implemented in the form of an application-specific integrated circuit (ASIC).

Hereinafter, embodiments of the present invention will be described with reference to the accompanying drawings.

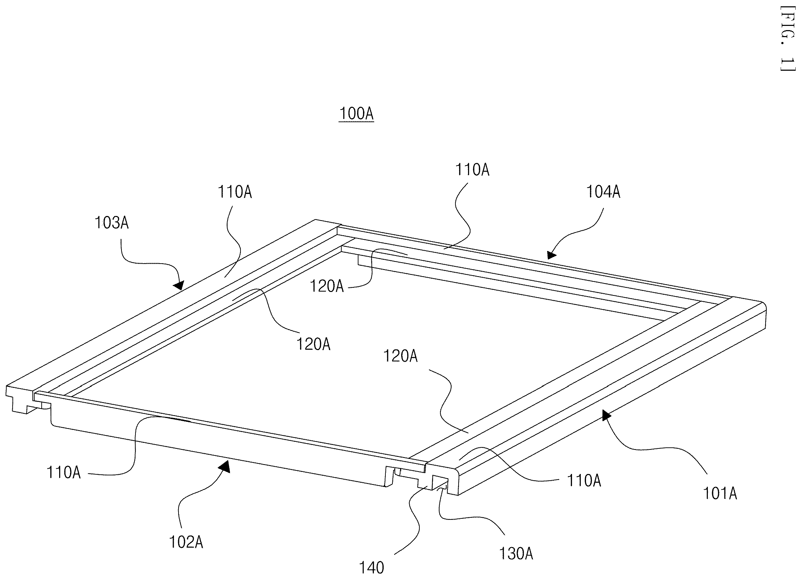

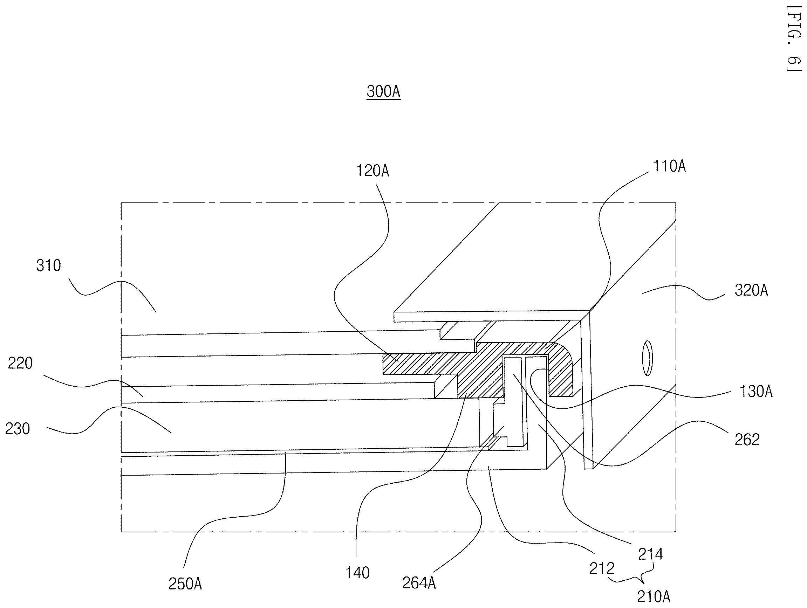

First, an elastic mold frame 100A and a display device 300A including the same according to an embodiment of the present disclosure will be described with reference to FIGS. 1 to 6. FIGS. 1 to 5 are a perspective view and a cross-sectional view of an elastic mold frame 100A according to an embodiment of the present disclosure, and FIG. 6 is a side cross-sectional view of a backlight unit in which the elastic mold frame 100A is used and a display device 300A including the backlight unit.

As shown in FIGS. 1 to 6, an elastic mold frame 100A according to an embodiment of the present invention is provided in a display device 300A including a liquid crystal panel 310, an optical sheet 220 disposed behind the liquid crystal panel 310, a light guide plate 230 or a diffusion plate 240 disposed behind the optical sheet 220, and a light source module 260A for irradiating light to the light guide plate 230 or the diffusion plate 240, and is disposed outside the liquid crystal panel 310 and the optical sheet 220 to provide a portion in which the liquid crystal panel 310 is seated, thereby determining an installation position in the display device 300A It's an absence.

The elastic mold frame 100A is configured to surround the outer periphery of the liquid crystal panel 310, thereby protecting the liquid crystal panel 310 from external impact or vibration.

Here, the optical sheet 220, the light guide plate 230, the diffusion plate 240, and the light source module 260A may constitute a backlight unit.

The elastic mold frame 100A may include a bumper portion 110A, a mounting portion 120A, and a chassis-receiving groove 130A.

The bumper portion 110A may be formed to surround the outer periphery of the liquid crystal panel 310 and may be formed in a rectangular frame shape as a whole.

The bumper portion 110A may have a sufficient thickness in the radial direction of the liquid crystal panel 310 to protect the liquid crystal panel 310 by absorbing external impacts and vibrations applied to the side surface of the liquid crystal panel 310. In an embodiment, the thickness of the bumper portion 110A may be formed to be longer than the height of the mounting portion 120A to be described later.

In addition, in an embodiment, the bumper portion 110A may have a rounded corner connecting the front surface and the side surface. Here, the front surface refers to a direction in which an image surface of the liquid crystal panel 310 is disposed.

As described above, the structure in which the corners of the bumper portion 110A are rounded may distribute the impact applied to the outside of the bumper portion 110A at various angles, particularly in the corner direction, in a wide range, thereby improving the impact absorption performance of the elastic mold frame 100A.

Unlike this, in the structure in which the corners of the bumper portion 110A are non-rounded, the tip of the non-rounded corners receives the external impact intensively, and the impact is not smoothly dispersed throughout the bumper portion 110A and is transmitted to the liquid crystal panel 310 in a narrow area, so that the impact absorption performance may be lower than that of the rounded structure, and the impact resistance performance of the elastic mold frame 100A may be weak.

The mounting portion 120A extends from the bumper portion 110A toward the inner direction of the optical sheet 220, and is a portion in which the outer portion of the rear surface of the liquid crystal panel 310 is mounted by a predetermined width.

The mounting portion 120A may be disposed between the liquid crystal panel 310 and the optical sheet 220 when the liquid crystal panel 310 is mounted to form a gap between the liquid crystal panel 310 and the optical sheet 220.

The chassis-receiving groove 130A is a groove portion that forms a concave space in the body of the elastic mold frame 100A, and is a space in which a portion of an end portion of the bottom chassis 210A, which will be described later, is inserted and fastened.

Here, a portion of the end of the bottom chassis 210A refers to the front end of the side wall 214 in the bottom chassis 210A including the base and the side wall 214.

As described above, the elastic mold frame 100A according to an embodiment of the present invention may be manufactured by the injection molding method in which the bumper portion 110A, the mounting portion 120A, and the chassis-receiving groove 130A are integrally formed in one body, and the bumper portion 110A, the mounting portion 120A, and the chassis-receiving groove 130A are formed.

In addition, the elastic mold frame 100A according to an embodiment of the present disclosure may be made of a material having elasticity, and in an embodiment, the elastic mold frame 100A may be made of a silicone or rubber material.

The elastic mold frame 100A made of a silicone or rubber material has an advantage in that the mold manufacturing time is shorter than that of the plastic injection mold and the cost required for mold manufacturing is low.

In addition, the elastic mold frame 100A made of a silicone or rubber material improves a buffering function when the liquid crystal panel 310 is supported, and thus has an advantage of securing significantly higher vibration and drop reliability compared to a conventional plastic mold frame.

In addition, since the elastic mold frame 100A made of a silicone or rubber material is elastically deformable due to the nature of the material, the contact surface with the liquid crystal panel 310 may be hermetically sealed, and thus has excellent anti-vibration performance to prevent penetration of foreign substances into the display device 300A.

In addition, the elastic mold frame 100A made of a silicone or rubber material has a high frictional force compared to the liquid crystal panel 310 and the bottom chassis 210A and/or the top chassis 320A to be described later, and thus has an advantage in that the degree of dislocation of components including the liquid crystal panel 310 may be significantly reduced even in an environment in which vibration, external impact, and load are applied for a long time. In particular, when the surface treatment is performed so that the contact surface between the liquid crystal panel 310 and the bottom chassis 210A and/or the top chassis 320A has a high surface roughness, a higher frictional force may be provided.

Meanwhile, the elastic mold frame 100A according to an embodiment of the present disclosure as described above may include the first mold 101A, the second mold 102A, the third mold 103A, and the fourth mold 104A corresponding to each of the four sides of the liquid crystal panel 310 formed in a rectangular shape.

Here, the first mold 101A, the second mold 102A, the third mold 103A, and the fourth mold 104A may be separately injection-molded and manufactured, and then may be connected to each other when the backlight unit is assembled.

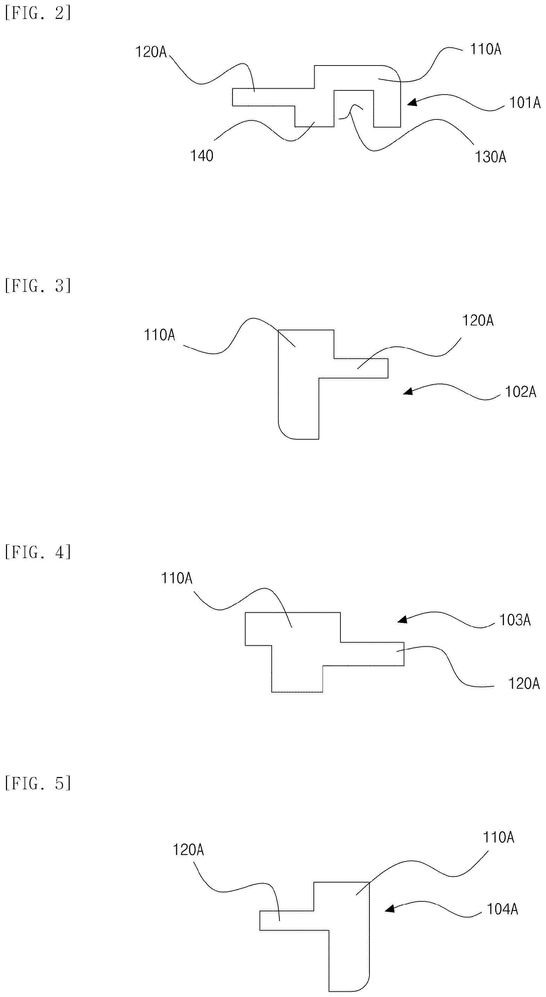

In addition, as shown in FIG. 3, the elastic mold frame 100A according to an exemplary embodiment of the present invention may be configured to hold the light source module 260A on one of four sides when the light source module 260A is disposed on the side of the light guide plate 230 to be applied to a backlight unit of a type in which light is irradiated.

Specifically, among the first mold 101A, the second mold 102A, the third mold 103A, and the fourth mold 104A, the first mold 101A may be configured such that a portion of the non-light emitting substrate region 262 of the light source module 260A that emits light toward the light guide plate 230 from the side surface of the light guide plate 230 to be described later may be inserted into the chassis-receiving groove 130A together with the side wall 214 of the bottom chassis 210A, as illustrated in FIG. 6.

To implement this structure, in an embodiment, the chassis-receiving groove 130A formed in a mold configured to allow a portion of the non-light emitting substrate region 262 of the light source module 260A to be inserted into the chassis-receiving groove 130A may be formed to be concave in the front direction of the light guide plate 230.

In addition, the elastic mold frame 100A according to an embodiment of the present invention may include a stepped portion 140 protruding rearward from the start portion of the extension portion to determine the relative position between the optical sheet 220 and the light guide plate 230.

Meanwhile, referring to FIG. 6, the backlight unit including the elastic mold frame 100A according to an embodiment of the present disclosure and the display device 300A including the backlight unit will be described.

The backlight unit according to an embodiment of the present invention may include an optical sheet 220, a bottom chassis 210A, a light source module 260A, an elastic mold frame 100A, a light guide plate 230, and a reflective film 250A.

The optical sheet 220 serves to uniformly diffuse the light irradiated from the lamp of the light source module 260A while passing the light through the light guide plate 230 without light loss.

The optical sheet 220 should have high total light transmittance and high haze characteristics, and has high optical efficiency, that is, high luminance characteristics based on optical characteristics.

In addition, such an optical sheet 220 is typically manufactured by coating a composition comprising a polymer resin and spherical particles on a substrate sheet.

The bottom chassis 210A is a structure including a back plate 212 and a side wall 214 extending forward while surrounding the outer periphery of the back plate 212, and having an accommodation space therein.

The light source module 260A may be accommodated in the accommodating space of the bottom chassis 210A, disposed on the side wall 214 of the bottom chassis 210A, disposed between the optical sheet 220 and the back plate 212, and may irradiate light to the side surface of the light guide plate 230. In an embodiment, the light source module 260A may include a light emitting device and a non-light emitting substrate region 262 on which the light emitting device is mounted.

The elastic mold frame 100A is substantially the same as the elastic mold frame 100A according to an embodiment of the present invention described above with reference to FIGS. 1 to 5, and thus a detailed description thereof will be omitted.

The light guide plate 230 is a member that uniformly diffuses the light irradiated from the light source module 260A, and may be disposed between the back plate 212 of the bottom chassis 210A and the optical sheet 220 so that the light source module 260a is located on the side.

The reflective film 250A may be disposed on the rear surface of the light guide plate 230 to prevent light loss through the rear of the light guide plate 230.

The backlight unit according to an embodiment of the present invention having such a configuration may be configured in a type in which the light source module 260A is disposed on one of the four sides to irradiate light from the side.

In this case, as illustrated in FIGS. 2 to 5, the elastic mold frame 100A may be configured such that the first mold 101A among the first mold 101A, the second mold 102A, the third mold 103A, and the fourth mold 104A corresponding to each of the four sides of the optical sheet 220 includes the chassis-receiving groove 130A, and the chassis-receiving groove 130A may be excluded from the remaining second mold 102A, the third mold 103A, and the fourth mold 104A.

Meanwhile, the display device 300A including the backlight unit according to an embodiment of the present disclosure as described above may include the liquid crystal panel 310 mounted on the mounting portion 120A of the elastic mold frame 100A and having the side surface surrounded by the bumper portion 110A, and the top chassis 320A covering a portion of the front periphery of the backlight unit and the liquid crystal panel 310 and the front surface and the side surface of the elastic mold frame 100A included in the backlight unit and coupled to the bottom chassis 210A included in the backlight unit.

Here, the top chassis 320A may be configured in a bent structure that constitutes a bezel on the front surface of the liquid crystal panel 310 and covers the side wall 214 of the backlight unit as in the embodiment illustrated in FIG. 6, but is not limited thereto.

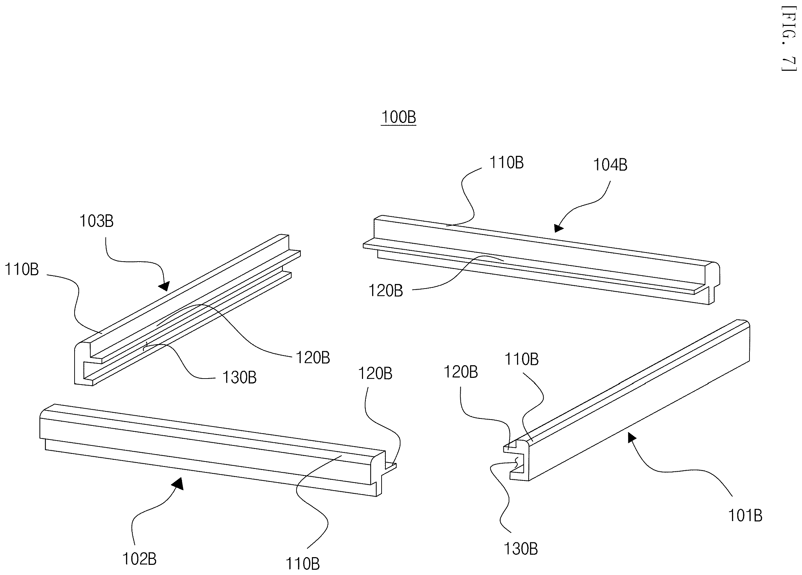

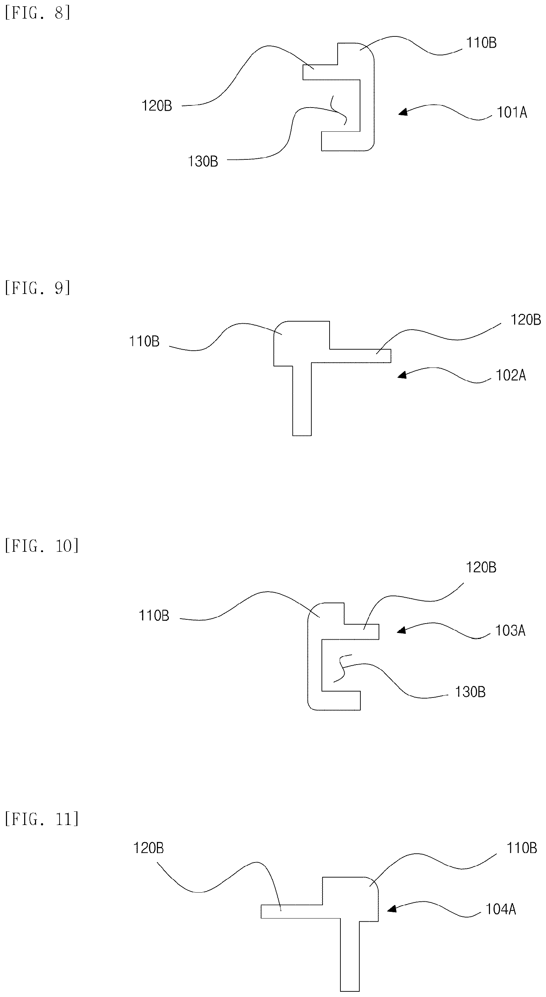

Next, an elastic mold frame 100B according to another embodiment of the present invention will be described with reference to FIGS. 7 to 12.

The elastic mold frame 100B according to another embodiment of the present invention shown in FIGS. 7 to 12 has a structure applied to a backlight unit of a type in which the light source module 260B irradiates light from the rear of the optical sheet 220.

As illustrated in FIGS. 7 to 12, an elastic mold frame 100B according to another embodiment of the present disclosure is substantially the same in that it includes a bumper portion 110B, a mounting portion 120B, and a chassis-receiving groove 130B and is made of a material having elasticity, such as silicone or rubber, like the elastic mold frame 100A according to the embodiment of the present disclosure described above with reference to FIGS. 1 to 6, but has a difference in that it does not have a stepped portion 140.

Here, the bumper portion 110B and the mounting portion 120 have substantially the same structure and function as those of the bumper portion 110B and the mounting portion 120B included in the elastic mold frame 100B according to the embodiment of the present disclosure described above with reference to FIGS. 1 to 6, and thus detailed descriptions thereof will be omitted.

Meanwhile, in the elastic mold frame 100B according to another embodiment of the present disclosure, in order to be applied to a backlight unit of a type in which the light source module 260B irradiates light from the rear of the optical sheet 220, the chassis-receiving groove 130B may be formed in the first mold 101B and the third mold 103B facing each other among the first mold 101B, the second mold 102B, the third mold 103B, and the fourth mold 104B, and the chassis-receiving groove 130B may be excluded from the remaining second mold 102B and the fourth mold 104B.

In addition, in the first mold 101B and the third mold 103B, the chassis-receiving groove 130B may be formed to be concave in the lateral direction of the optical sheet 220 so that the outer periphery of the optical sheet 220 and the diffusion plate 240 may be inserted into the chassis-receiving groove 130B.

Finally, a backlight unit including an elastic mold frame 100B according to another embodiment of the present invention shown in FIGS. 7 to 11 and a display device 300B including the backlight unit will be described.

In the backlight unit according to another embodiment of the present invention, as described above, the light source module 260B irradiates light toward the optical sheet 220 from the rear of the optical sheet 220.

To this end, in an embodiment, the light source module 260B may be disposed on the back plate 212 of the bottom chassis 210B and may be arranged to irradiate light toward the optical sheet 220.

In addition, the backlight unit according to another embodiment of the present disclosure may include diffusion plate 240 disposed between the light source module 260B and the optical sheet 220 to uniformly diffuse the light irradiated from the light source module 260a toward the entire area of the optical sheet 220, and an inclined reflective plate provided to surround the circumference of the light irradiation interval formed between the light source module 260B and the optical sheet 220.

In addition, in an embodiment, as shown in FIG. 6, the chassis-receiving groove 130B formed in the elastic mold frame 100B may be formed to be concave in the radial direction of the optical sheet 220 so that the end portion of the side wall 214 of the bottom chassis 210B, the outer periphery of the optical sheet 220, and the outer periphery of the diffusion plate 240 are drawn in.

At this time, the end of the side wall 214 of the bottom chassis 210B is preferably bent to be inserted into and fastened to the chassis-receiving groove 130B.

In this configuration, as described above, the elastic mold frame 100B may include the chassis-receiving grooves 130B in the first mold 101B and the third mold 103B, which are disposed to face each other among the first mold 101B, the second mold 102B, the third mold 103B, and the fourth mold 104B, and may support both side portions of the bottom chassis 210B, both side portions of the diffusion plate 240, and both side portions of the optical sheet 220.

Meanwhile, the display device 300B including the backlight unit according to another embodiment of the present disclosure as described above may include the liquid crystal panel 310 mounted on the mounting portion 120B of the elastic mold frame 100B and having the side surface surrounded by the bumper portion 110B, and the top chassis 320B covering a portion of the front periphery of the backlight unit and the liquid crystal panel 310 and the front surface and the side surface of the elastic mold frame 100B included in the backlight unit and coupled to the bottom chassis 210B included in the backlight unit.

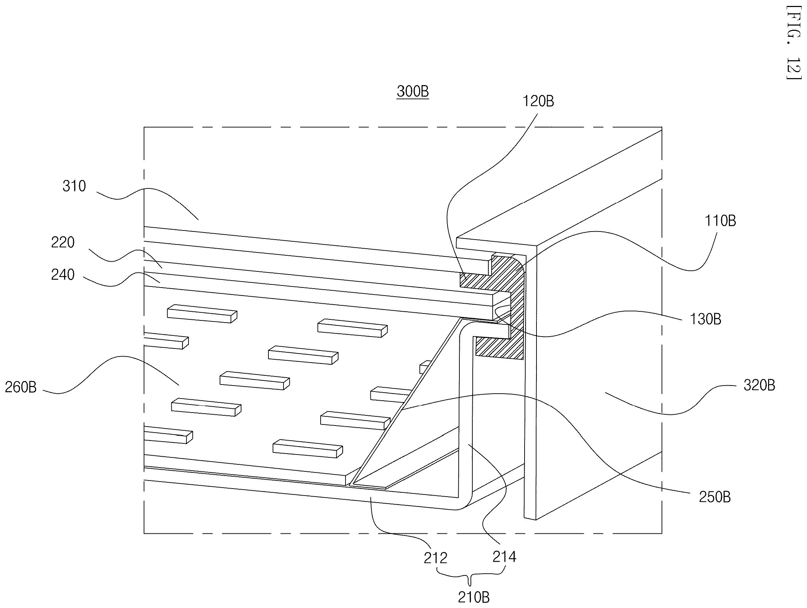

Here, the top chassis 320B may be configured in a bent structure that constitutes a bezel on the front surface of the liquid crystal panel 310 and covers the side wall 214 of the backlight unit as in the embodiment illustrated in FIG. 12, but is not limited thereto.

The present invention is not limited to the foregoing embodiments and the accompanying drawings, but is defined by the following claims. It will be apparent to those skilled in the art that various modifications and alterations can be made to the structure of the invention without departing from the spirit and scope of the invention.

### <Description of Reference Numerals>

100A, 100B: Elastic mold frame
101A, 101B: First mold
102A, 102B: Second mold
103A, 103B: Third mold
104A, 104B: Fourth mold
110A, 110B: Bumper portion
120A, 120B: Mounting portion
130A, 130B: Chassis-receiving groove
140: Stepped portion
210A, 210B: Bottom chassis
212: back plate
214: side wall
220: Optical sheet
230: Light guide plate
240: Diffusion plate
250A, 250B: Reflective film
260A, 260B: Light source module
262: Non-light emitting substrate region
300A, 300B: Display device
310: Liquid crystal panel
320A, 320B: Top chassis

### Industrial Applicability

According to one embodiment of the present invention, the protective performance for protecting the liquid crystal panel from vibration and impact can be improved, thereby enhancing industrial applicability.

In addition, according to one embodiment of the present invention, the manufacturing time can be shortened and the cost of mold fabrication can be reduced, which also contributes to improved industrial applicability.

## Claims

1. An elastic mold frame provided in a display device including a liquid crystal panel, an optical sheet disposed at a rear of the liquid crystal panel, a light guide plate or a diffusion plate disposed at a rear of the optical sheet, and a light source module configured to irradiate light to the light guide plate or the diffusion plate, and disposed at an outer periphery of the liquid crystal panel and the optical sheet, the elastic mold frame comprising:
a bumper portion formed to surround an outer periphery of the liquid crystal panel; and
a mounting portion extending from the bumper portion to an inside of the optical sheet to allow a portion of a rear surface of the liquid crystal panel to be mounted thereon, and forming a gap between the liquid crystal panel and the optical sheet,
wherein the elastic mold frame is made of an elastic material.

2. The elastic mold frame of claim 1,
wherein the material is silicone or rubber.

3. The elastic mold frame of claim 1, further comprising a chassis-receiving groove into which a portion of an end of a bottom chassis, which is formed in a box shape with an open front and accommodates the light source module therein, is inserted and fastened.

4. The elastic mold frame of claim 3,
wherein the elastic mold frame comprises a first mold, a second mold, a third mold, and a fourth mold respectively corresponding to four sides of the liquid crystal panel having a rectangular shape, and the first mold, the second mold, the third mold, and the fourth mold are separately injection-molded.

5. The elastic mold frame of claim 4,
wherein one of the first mold, second mold, third mold, and fourth mold includes the chassis-receiving groove recessed in a frontward direction of the light guide plate, so that a portion of a non-light emitting substrate region of the light source module, which irradiates light toward the light guide plate from a side of the light guide plate, is insertable into the chassis-receiving groove.

6. The elastic mold frame of claim 4,
wherein the chassis-receiving groove is formed in the first mold and the third mold facing each other among the first mold, the second mold, the third mold, and the fourth mold.

7. The elastic mold frame of claim 6,
wherein the first mold and the third mold include the chassis-receiving groove recessed in a lateral direction of the optical sheet, so that an outer edge of the optical sheet and the diffusion plate is insertable into the chassis-receiving groove.

8. The elastic mold frame of claim 2,
wherein the bumper portion has a rounded corner where the front and side surfaces are connected.

9. A backlight unit comprising:
an optical sheet;
a bottom chassis including a back plate and a side wall and having an accommodating space therein;
a light source module accommodated in the accommodating space and disposed between the optical sheet and the back plate to irradiate light; and elastic mold frame including a mounting portion coupled to the side wall of the bottom chassis and extending from an outer side of the optical sheet toward an inner side of the optical sheet, and a bumper portion protruded in a stepped manner from an outer side of the mounting portion toward a front side, the elastic mold frame including silicone or rubber.

10. The backlight unit of claim 9, further comprising:
the light source module disposed on the side wall,
a light guide plate disposed between the back plate and the optical sheet so that the light source module is positioned at a side thereof, and
a reflective film disposed on a rear surface of the light guide plate.

11. The backlight unit of claim 10,
wherein the elastic mold frame comprises:
a chassis-receiving groove into which an end portion of the side wall and a portion of a non-light emitting substrate region of the light source module are inserted.

12. The backlight unit of claim 10,
wherein the light source module is disposed on one of four sides of the optical sheet having a rectangular shape, and
wherein one of a first mold, a second mold, a third mold, and a fourth mold of the elastic mold frame, each corresponding to one of four sides of the optical sheet, may be provided with a chassis-receiving groove.

13. The backlight unit of claim 9,
wherein the light source module is disposed on the back plate and is configured to irradiate light toward the optical sheet,
the backlight unit comprising:
a diffusion plate disposed between the light source module and the optical sheet; and
a reflective plate provided to surround a periphery of a light-irradiation gap between the light source module and the optical sheet.

14. The backlight unit of claim 13,
wherein the elastic mold frame comprises a chassis-receiving groove into which an end portion of the side wall, an outer edge of the optical sheet, and an outer edge of the diffusion plate are inserted.

15. The backlight unit of claim 14,
wherein the elastic mold frame comprises the chassis-receiving groove in the first mold and the third mold facing each other among a first mold, a second mold, a third mold, and a fourth mold corresponding to each of four sides of the optical sheet formed in a rectangular shape.

16. The backlight unit of claim 9,
wherein the bumper portion has a rounded corner where the front and side surfaces are connected.

17. A display device comprising:
a liquid crystal panel;
a backlight unit according to claims 9 to 16 disposed at a rear side of the liquid crystal panel to provide light to the liquid crystal panel; and
a top chassis covering a portion of a front outer periphery of the liquid crystal panel and front and side surfaces of an elastic mold frame included in the backlight unit and coupled to a bottom chassis included in the backlight unit.
